# NEUE EUROPÄISCHE PATENTSCHRIFT

(11) **EP 2 420 690 B2**
(45) Veröffentlichungstag und Bekanntmachung des Hinweises auf die Entscheidung über den Einspruch: **30.05.2018**
(45) Hinweis auf die Patenterteilung: 04.03.2015
(21) Anmeldenummer: 11177463.4
(22) Anmeldetag: 12.08.2011
(51) Int. Cl.: F16D 55/226

(54) **Scheibenbremse, insbesondere für ein Nutzfahrzeug**
Disc brake, in particular for a commercial vehicle
Frein à disque, en particulier pour un véhicule utilitaire

(30) Priorität: 18.08.2010 DE 102010034728
(43) Veröffentlichungstag der Anmeldung: 22.02.2012
(73) Patentinhaber: KNORR-BREMSE Systeme für Nutzfahrzeuge GmbH, 80809 München (DE)
(72) Erfinder: Pahle, Wolfgang, 83707 Bad Wiessee (DE)
(74) Vertreter: Specht, Peter

(56) Entgegenhaltungen:
- EP-A1- 1 591 689
- EP-A1- 2 199 640
- WO-A1-02//064991
- WO-A1-2009//127293
- DE-A1-102004 002 571
- DE-A1-102005 019 255
- DE-A1-102009 009 567
- DE-A1-102009 009 567
- DE-B3-102007 035 162
- DE-U1-202004 006 651
- JP-A- H1 163 041
- JP-A- 11 063 041
- US-A- 6 073 732
- US-B2- 7 631 733

## Beschreibung

Die Erfindung betrifft eine Scheibenbremse, insbesondere für ein Nutzfahrzeug, gemäß dem Oberbegriff des Anspruchs 1.

Bei der Montage der Bremsbacken kann es zu Fehlmontagen kommen, sowohl durch Einsatz einer falschen Bremsbacke, die nicht für die jeweilige Scheibenbremse vorgesehen und zulässig ist, wie auch durch Rechts-/Links-Verwechseln der Bremsbacken bei deren Einbau, wobei die Bremsbacken unbemerkt um 180° verdreht montiert werden können, so dass die Belagträgerplatte zur Bremsscheibe ausgerichtet ist. Diese Montage kann, da die Funktionssicherheit der Scheibenbremse nicht mehr gegeben ist, zu schweren und gefährlichen Betriebsstörungen des Fahrzeuges führen.

Neben der genannten Fehlmontage besteht bei den bekannten Scheibenbremsen auch die Möglichkeit, als Ersatz Bremsbacken einzusetzen, die keine Zulassung für das betreffende Fahrzeug bzw. die betreffende Scheibenbremse haben.

Dies kann ebenfalls zu einer Einschränkung der Betriebssicherheit der Scheibenbremse führen, die nicht akzeptabel ist, zumal Scheibenbremsen zu den Bauteilen eines Fahrzeuges zählen, denen in sicherheitsrelevanter Hinsicht eine besondere Bedeutung zukommt.

Um dies zu verhindern, wird in der DE 199 31 024 C1 vorgeschlagen, bei einer Schiebesattel-Scheibenbremse im Bereich der reaktionsseitigen Auflagefläche des Bremssattels eine Bohrung vorzusehen, in die ein Vorsprung der Belagträgerplatte einrastet, wobei zur Einführung der Bremsbacke die Auflagefläche eine sich in Einschieberichtung der Bremsbacke erstreckende Nut aufweist, die in die Bohrung mündet.

Allerdings ist diese Konstruktion nur mit einem zusätzlichen, die Herstellungskosten der Scheibenbremse insgesamt nachteilig beeinflussenden Fertigungsaufwand zu realisieren.

In diesem Sinne ist auch eine in der EP 0 853 736 B1 geoffenbarte Scheibenbremse zu bewerten, bei der separate Zapfen in die reaktionsseitige Auflagefläche des Bremssattels eingelassen sind, die in Nuten der Belagträgerplatte eingreifen.

Eine gattungsgemäße Scheibenbremse ist in der EP 2 199 640 A1 geoffenbart. Darin wird vorgeschlagen, am Rücken des Bremssattels einen Vorsprung auszubilden, wobei dieser unmittelbar vom Grund des Bremssattels ausgeht und abständig zu einer seitlichen Anlagefläche angeordnet ist. Dieser Vorsprung liegt in einer Ausnehmung einer Belagträgerplatte einer Bremsbacke ein, wodurch eine Kodierung gebildet ist.

Der Erfindung liegt die Aufgabe zugrunde, eine Scheibenbremse der gattungsgemäßen Art so weiterzuentwickeln, dass mit konstruktiv und fertigungstechnisch geringem Aufwand eine Verbesserung der Betriebssicherheit erreicht wird.

Diese Aufgabe wird durch eine Scheibenbremse mit den Merkmalen des Anspruchs 1 gelöst.

Durch diese konstruktive Ausbildung wird erreicht, dass nur die für diesen Einsatzzweck bestimmte Bremsbacke montiert werden kann, wobei gleichzeitig sichergestellt ist, dass sie ausschließlich so einsetzbar ist, dass ihre Reibbelagseite der Bremsscheibe zugewandt ausgerichtet ist.

Darüber hinaus ist der Einsatz einer für diese Scheibenbremse nicht zugelassenen Bremsbacke nicht möglich, zumindest nicht ohne Manipulation des Bremssattels, beispielsweise durch Entfernen der Vorsprünge. Die miteinander korrespondierenden Vorsprünge des Bremssattels einerseits und der Vertiefungen der Belagträgerplatte andererseits bilden eine Kodierung, da sie nur in einer bestimmten Konfiguration miteinander kompatibel sind.

Die Kodierung erlaubt darüber hinaus eine exakte Zuordnung bezüglich kundenspezifischer Forderungen. So können Bremsbacken mit unterschiedlichen Reibwerten der Reibbeläge für einen bestimmten Einsatzzweck vorbestimmt werden, ebenso wie für die unterschiedlichen Anforderungen an einen Innenbelag und einen Außenbelag. Letzteres, um z.B. dem unterschiedlichen Rissverhalten einer Bremsscheibe Rechnung zu tragen.

Fertigungstechnisch zeichnet sich die Erfindung insbesondere durch eine kostenneutrale Realisierung aus.

Grundsätzlich muss die reaktionsseitige Andruckfläche eines als Gussteil ausgebildeten Bremssattels bearbeitet werden, um vorhandene Ausformschrägen zu entfernen und eine ebene Auflagefläche für die Bremsbacke zu schaffen.

Hierzu taucht ein Scheibenfräser von der Innenseite des Bremssattels parallel zur später montierten Bremsscheibe ein und bewegt sich radial nach außen in Richtung einer Montageöffnung, über die die Bremsbacken eingesetzt werden.

Die erfindungsgemäß vorgesehenen Vorsprünge im Grenzbereich der Andruckfläche werden dadurch erreicht, dass der Scheibenfräser in Richtung der Montageöffnungen nur so weit im Eingriff ist, dass rechts und links jeweils ein Bereich unter Bildung der Vorsprünge erhalten bleibt.

Die Vertiefungen der Belagträgerplatte sind in ihrer Breite an die Vorsprünge angepasst, wobei beide als Widerlager zur Aufnahme von Umfangskräften fungieren, wie sie bei einer Bremsung auftreten.

Eine Variierung des Kodes kann durch eine unterschiedliche Gestaltung bzw. Breitendimensionierung der Vorsprünge und Vertiefungen erreicht werden, sowohl bezüglich jeder einzelnen Scheibenbremse, deren jeweiliger Bremssattel in ihrer Breite verschieden dimensionierte Vorsprünge aufweist, als auch mehrerer Scheibenbremsen, deren Bremssättel jeweils zwar gleich breite, jedoch die einzelnen Bremssättel zueinander unterschiedliche Vorsprünge aufweisen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt auf eine erfindungsgemäße Scheibenbremse in einer vergrößerten Draufsicht
- Figur 2: einen Teilausschnitt eines Bremssattels der Scheibenbremse in einer perspektivischen Ansicht
- Figur 3: einen Querschnitt durch den Bremssattel nach Figur 2
- Figur 4: ein Ausführungsbeispiel einer Bremsbacke der Scheibenbremse in einer Rückansicht.

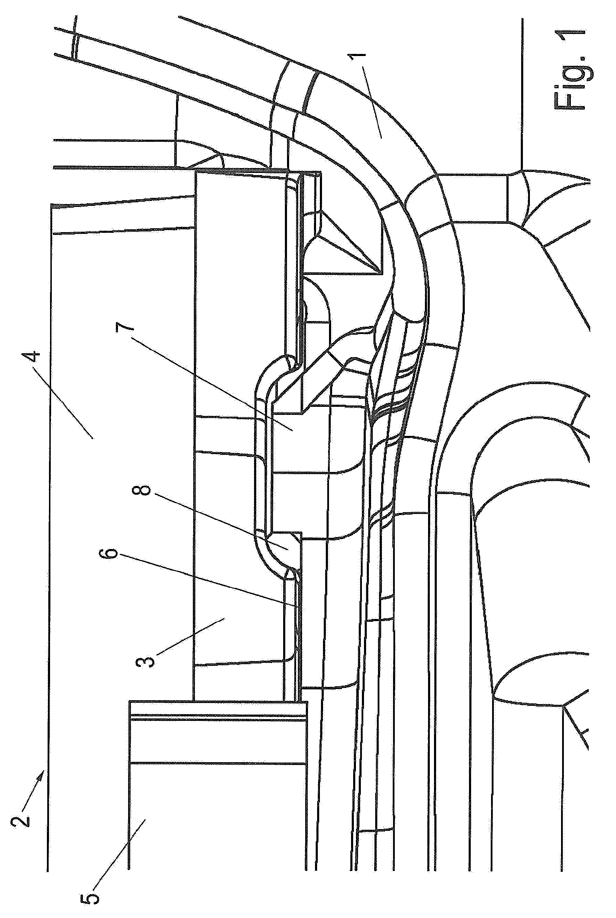

In der Figur 1 ist ein Teilausschnitt einer Schiebesattel-Scheibenbremse, insbesondere für ein Nutzfahrzeug, dargestellt, mit einem Bremssattel 1, von dem der reaktionsseitige Teil ausschnittweise dargestellt ist.

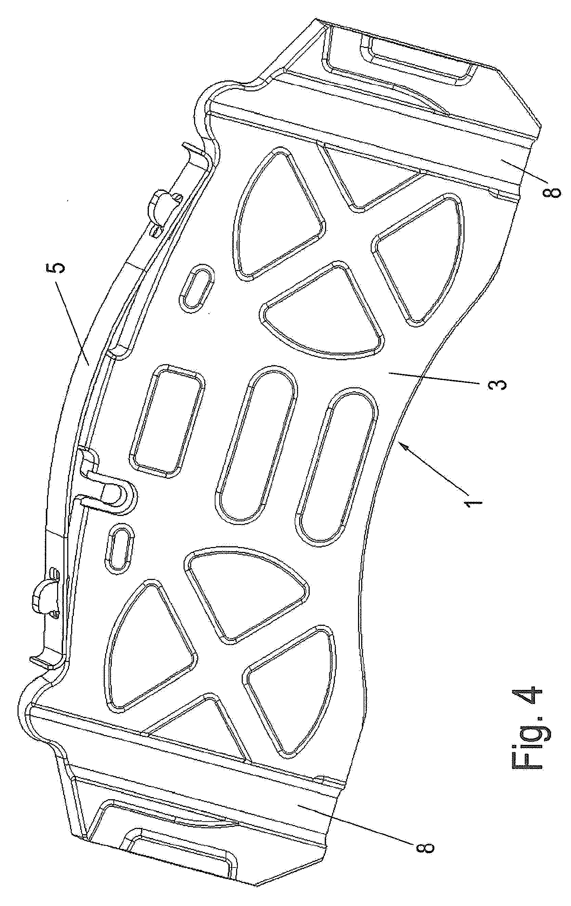

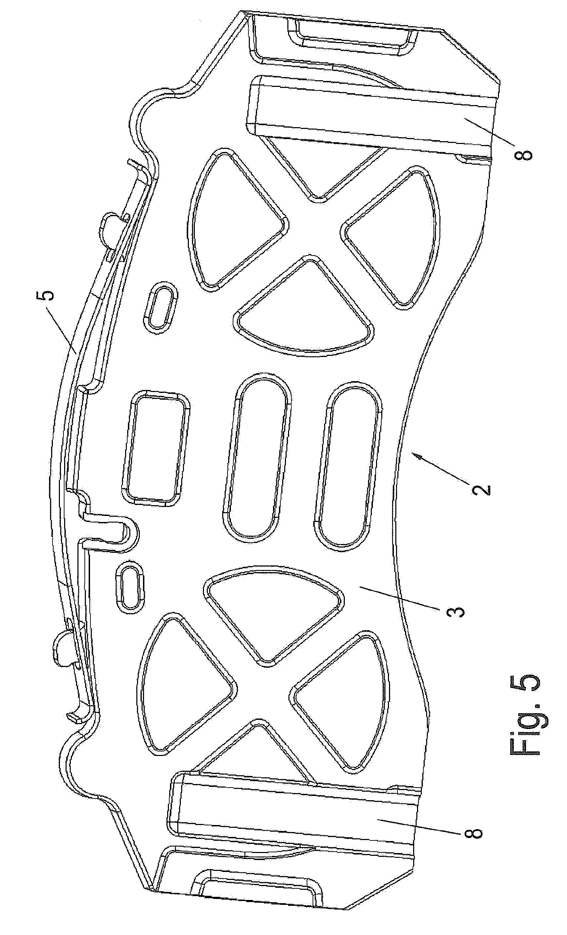

In dem Bremssattel 1 ist eine Bremsbacke 2 angeordnet, die aus einer Belagträgerplatte 3 und einem daran befestigten Reibbelag 4 besteht, wobei an der Belagträgerplatte 3 eine Belaghaltefeder 5 (Figur 4) in Verbindung mit einem nicht dargestellten Haltebügel dem Niederhalten der Bremsbacke dient.

Die Belagträgerplatte 3 der Bremsbacke 2 liegt an einer spangebend bearbeiteten, ebenen und parallel zu einer nicht gezeigten Bremsscheibe verlaufenden Andruckfläche 6 an, die die Innenfläche einer den Bremssattel begrenzenden Wandung bildet.

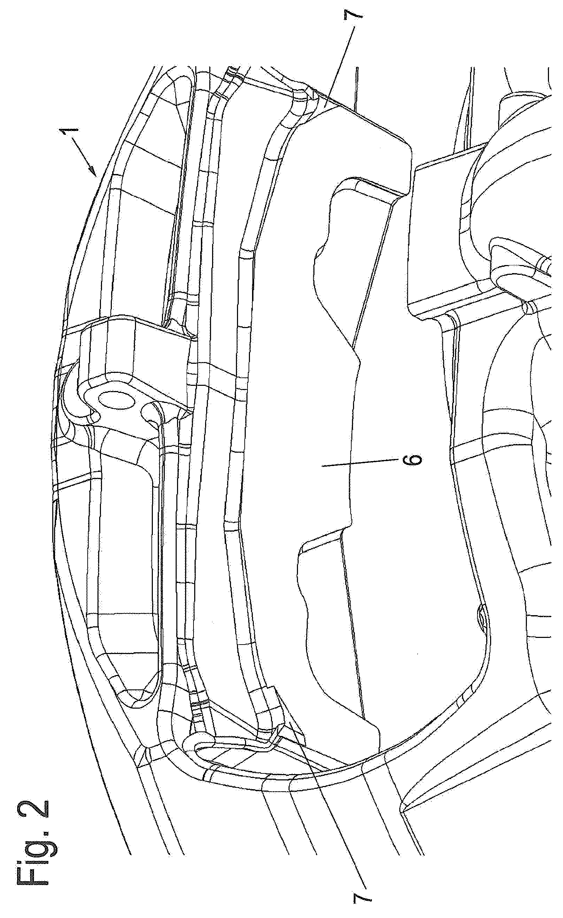

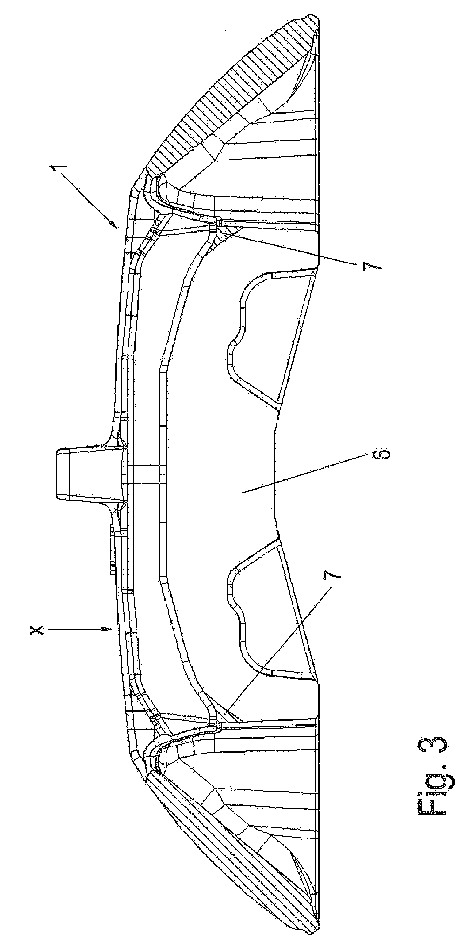

Wie insbesondere die Figuren 1 und 2, die den Bremssattel 1 als Einzelheit wiedergeben, zeigen, sind erfindungsgemäß im Grenzbereich der Andruckfläche 6 Vorsprünge 7 vorgesehen. Dabei sind die Vorsprünge 7 in den sich gegenüberliegenden Eckbereichen der Andruckfläche 6 positioniert und zwar der Einschuböffnung für die Bremsbacke 2 zugewandt, die in der Figur 3 mit X angedeutet ist.

Die Vorsprünge 7 ragen in nutartige Vertiefungen 8 auf der dem Reibbelag 4 abgewandten Rückseite der Belagträgerplatte 3, die in Figur 4 erkennbar ist.

Bei dem in der Figur 4 gezeigten Beispiel sind die Vertiefungen 8 in Einschubrichtung der Bremsbacke 2 durchgehend ausgeführt.

Die Breite der Vertiefung 8 entspricht etwa der zugeordneten Breite des einliegenden Vorsprungs 7. In jedem Fall bilden die Vorsprünge 7 in Kombination mit den Vertiefungen 8 eine Kodierung, da nur solche Bremsbacken 2 einsetzbar sind, die die angepassten Vertiefungen 8 aufweisen.

## Patentansprüche

1. Scheibenbremse, insbesondere für ein Nutzfahrzeug, mit einem eine Bremsscheibe übergreifenden Bremssattel (1), in dem jeweils aus einer Belagträgerplatte (3) und einem daran befestigten, an die Bremsscheibe anpressbaren Reibbelag (4) bestehende Bremsbacken (29) angeordnet sind, von denen mindestens eine an einer spangebend bearbeiteten, ebenen und parallel zur Bremsscheibe verlaufenden Andruckfläche (6) im Innern des Bremssattels (1) anliegt, wobei an der Andruckfläche (6) ein Vorsprung (7) vorgesehen ist, der in einer Vertiefung (8) der Belagträgerplatte (3) der anliegenden Bremsbacke (2) einliegt, **dadurch gekennzeichnet, dass** der Vorsprung (7) im Grenzbereich, in mindestens einem einer Einschuböffnung (X) für die Bremsbacke (29) zugewandten seitlichen Eckbereich der Andruckfläche (6) angeordnet ist, und dass der Vorsprung (7) aus einem unbearbeiteten Bereich des aus Gusseisen bestehenden Bremssattels (1) gebildet ist und wobei die Vertiefung (8), bezogen auf die Einschubrichtung, sich durchgehend über die Belagträgerplatte (3) erstreckt.

2. Scheibenbremse nach Anspruch 1, **dadurch gekennzeichnet, dass** der Vorsprung (7) in dem einer Einschuböffnung für die Bremsbacke (2) des Bremssattels (1) zugewandten Bereich angeordnet ist.

3. Scheibenbremse nach einem der vorhergehenden Ansprüche, **dadurch gekennzeichnet, dass** die Vertiefung (8) nutartig ausgebildet ist.

4. Scheibenbremse nach einem der vorhergehenden Ansprüche, **dadurch gekennzeichnet, dass** die Vertiefung (8) in ihrer Breite etwa der zugeordneten Breite des einliegenden Vorsprungs (7) entspricht.

5. Scheibenbremse nach einem der vorhergehenden Ansprüche, **dadurch gekennzeichnet, dass** bei Anordnung von mehreren Vorsprüngen (7) diese unterschiedlich dimensioniert sind.

## Claims

1. Disc brake, in particular for a commercial vehicle, comprising a brake calliper (1) which encompasses a brake disc and in which are located brake shoes (29), each consisting of a backing plate (3) and a friction lining (4) secured thereto, which can be pressed against the brake disc and of which at least one bears against a pressing surface (6) in the interior of the brake calliper (1), which pressing surface (6) is machined in a chip-producing manner, is flat and extends parallel to the brake disc, wherein the pressing surface (6) is provided with a projection (7) which lies in a recess (8) of the backing plate (3) of the contacting brake shoe (2), **characterised in that** the projection (7) is located in the boundary region in at least one lateral corner region - facing an insertion opening (X) for the brake shoe (29) - of the pressing surface (6), and **in that** the projection (7) is formed from an unmachined region of the cast iron brake calliper (1), and wherein the recess (8), relative to the insertion direction, extends throughout the backing plate (3).

2. Disc brake according to claim 1, **characterised in that** the projection (7) is located in a region which faces an insertion opening for the brake shoe (2) of the brake calliper (1)

3. Disc brake according to any of the preceding claims, **characterised in that** the recess (8) is designed to be groove-like.

4. Disc brake according to any of the preceding claims, **characterised in that** the recess (8) corresponds in its width approximately to the with of the projection (7) located therein.

5. Disc brake according to any of the preceding claims, **characterised in that** the projections (7), if several are provided, have different dimensions.

## Revendications

1. Frein à disque, notamment pour un véhicule utilitaire, comprenant un étrier (1) de frein, qui chevauche un disque de frein et dans lequel sont montés des sabots (29) de frein constitués chacun d'une plaque (3) d'appui de garniture et d'une garniture (4) de friction, qui y est fixée et qui peut être appliquée au disque de frein, dont l'un au moins s'applique à l'intérieur (1) de l'étrier de frein sur une surface (6) d'application d'une pression, usinée avec enlèvement de copeaux, plane et s'étendant parallèlement au disque de frein, dans lequel il est prévu, sur la surface (8) d'application d'une pression, une saillie (7), qui pénètre dans un évidement (8) de la plaque (3) d'appui de garniture du sabot de frein (2) appliqué, **caractérisé en ce que** la saillie (7) est disposée dans la zone limite, dans au moins une région de coin latérale, tournée vers l'ouverture (X) d'insertion du sabot de frein (29), de la surface (6) d'application d'une pression et **en ce que** la saillie est formée d'une région non usinée de l'étrier de frein en fonte et dans lequel, rapporté au sens d'insertion, l'évidement s'étend en continu sur la plaque d'appui d'une garniture (3).

2. Frein à disque suivant la revendication 1, **caractérisé en ce que** la saillie (7) est disposée dans la région tournée vers une ouverture d'insertion du sabot de frein (2) de l'étrier de frein (1).

3. Frein à disque suivant l'une des revendications précédentes, **caractérisé en ce que** l'évidement (8) est constitué à la façon d'une rainure.

4. Frein à disque suivant l'une quelconque des revendications précédentes, **caractérisé en ce que** la largeur de l'évidement (8) correspond environ à la largeur associée de la saillie (7) insérée.

5. Frein à disque suivant l'une quelconque des revendications précédentes, **caractérisé en ce que**, s'il y a une pluralité de saillies (7), ces saillies ont des dimensions différentes.
